# EUROPEAN PATENT APPLICATION

(11) **EP 2 256 609 A2**
(43) Date of publication of application: **01.12.2010**
(21) Application number: 10159394.5
(22) Date of filing: 08.04.2010
(51) Int. Cl.: G06F 3/048

(54) **Mobile device capable of touch-based zooming and control method thereof**

(30) Priority: 28.05.2009 KR 20090046848
(71) Applicant: Samsung Electronics Co., Ltd., Suwon-si, Gyeonggi-do (KR)
(72) Inventor: Kim, Sang Heon, Gyeonggi-do (KR)
(74) Representative: Boakes, Jason Carrington

(57) **Abstract**

A mobile device has a touch sensitive surface such as a touch screen. In a touch-based zooming control method, the mobile device displays target data of a selected content on a screen. While the target data is displayed, the mobile device activates a zoom mode in response to a given gesture or input event. Then, the mobile device receives a touch-based gesture input which starts from a specific point on the target data, and executes a zooming function such as a zoom-in and a zoom-out in response to the received gesture input. Particularly, a continuous zooming control in various zooming rates is possible based on a single touch gesture. A toggling-based zooming control is also possible. A bitmap image is used for a rapid real-time display of the target data.

## Description

### BACKGROUND OF THE INVENTION

### Field of the Invention

The present invention relates in general to a touch-based zooming technology in a mobile device and, more particularly, to a mobile device having a touch sensitive surface such as a touch screen, and a touch-based zooming control method in such a mobile device.

### Description of the Related Art

With communication technologies having been advanced dramatically, the advent of new techniques and functions in mobile devices has steadily aroused customers' interest. In addition, various approaches to user-friendly interfaces have been introduced in the field of mobile devices. Meanwhile, many mobile devices today employ, as their input unit, a touch sensitive surface such as a touch screen instead of or in addition to a traditional keypad.

Particularly, there is a growing tendency for a size-limited mobile device to offer a zooming function which allows enlarging or reducing a displayed image at a user's request. One of typical zooming techniques is to offer some given zooming rates such as 10%, 20% or 200% and then receive a user's selection. A more advanced zooming technique is to offer a progress bar which allows a user to freely select a desired zooming rate.

The former zooming technique may have an inherent drawback that selectable zooming rates are fixed as default and thereby a user's selection is restricted. On the other hand, the latter zooming technique as well may have a drawback that a zooming focus is fixed. Therefore, this technique may fail to enlarge or reduce a displayed image around a user's desired point. As a result, a user should scroll an enlarged or reduced image to a desired position. Also, the latter technique may have another drawback that a process of executing a zooming function is relatively complicated. That is, this technique may require several zooming steps such as a selection of a zoom menu, an activation of a zoom mode, a zooming control using a progress bar, and an inactivation of a zoom mode. Unfortunately, this may cause inconvenience to a user who frequently uses a zooming function of the mobile device.

In view of the above-discussed problems, a pinch zoom technique has been introduced recently. This technique is, however, based on a multi-touch input by means of two finger interactions. Therefore, this technique may not be applicable to a mobile device having a normal touch screen incapable of handling a multi-touch input.

### BRIEF SUMMARY OF THE INVENTION

Accordingly, the present invention provides a mobile device and related method which allows a simpler and more convenient zooming function.

In an exemplary embodiment, the present invention provides a mobile device and related method which allows any of enlarging and reducing a displayed image around a user's desired point.

In another exemplary embodiment, the present invention provides a mobile device and related method which allows enlarging or reducing a displayed image through a single touch gesture on a normal touch screen.

In another exemplary embodiment, the present invention provides a mobile device and related method which allows enlarging or reducing a displayed image with a plurality of zooming rates selected by a user.

In another exemplary embodiment, the present invention provides a mobile device and related method which allows a continuous real-time zooming action in response to a simple gesture input of a user.

In another exemplary embodiment, the present invention provides a mobile device and related method which allows a rapid real-time display of target data through a quick response to a continuous zooming action by using a bitmap image of the display target data.

In another exemplary embodiment, the present invention provides a method for a touch-based zooming control in a mobile device, the method comprising: displaying target data of selected content on a screen; activating a zoom mode while the target data is displayed; receiving a touch-based gesture input starting from a specific point on the target data; and executing a zooming function in response to the gesture input.

In another exemplary embodiment, the present invention provides a method for a touch-based zooming control in a mobile device, the method comprising: activating a zoom mode in response to an interrupt for the zoom mode, the interrupt occurring at a specific point on a touch screen; receiving a touch-based gesture input for a zooming control in the zoom mode; performing a first zooming process for a bitmap image corresponding to target data of selected content around one of the specific point and a starting point of the gesture input in response to the gesture input; and performing a second zooming process for the target data depending on a zoomed amount of the bitmap image in response to a release of the gesture input.

In another embodiment, the present invention provides a mobile device comprising: a display unit configured to display target data of selected content enlarged or reduced depending on a zooming function; an input unit configured to receive a touch-based input event for executing the zooming function around a specific point on the target data when a zoom mode is activated; and a control unit configured to execute the zooming function associated with a bitmap image of the target data and to control the zooming function associated with the target data according to an enlargement or reduction ratio of the bitmap image.

Other advantages, and features of the present invention will become apparent to those skilled in the art from the following detailed description, which, taken in conjunction with the annexed drawings, describes exemplary embodiments of the present invention.

### BRIEF DESCRIPTION OF THE DRAWINGS

FIG. 1 illustrates a flow diagram of a method for a touch-based zooming control in a mobile device in accordance with an exemplary embodiment of the present invention.
FIGS. 2A and 2B illustrate a flow diagram of a method for a touch-based zooming control in a zoom mode of a mobile device in accordance with an exemplary embodiment of the present invention.
FIG. 3 illustrates a flow diagram of a method for displaying display target data depending on a touch-based zooming control in a mobile device in accordance with an exemplary embodiment of the present invention.
FIG. 4 illustrates a flow diagram of a method for a touch-based zooming control in a toggle mode of a mobile device in accordance with an exemplary embodiment of the present invention.
FIG. 5 illustrates an example of a process for activating a zoom mode of a mobile device in accordance with an exemplary embodiment of the present invention.
FIG. 6 illustrates an example of a process of executing a toggling function in a mobile device in accordance with an exemplary embodiment of the present invention.
FIG. 7 illustrates an example of a process of executing a zooming function depending on a touch-based user gesture in a mobile device in accordance with an exemplary embodiment of the present invention.
FIG. 8 illustrates an example of a process of executing a zooming function depending on a bitmap image in a mobile device in accordance with an exemplary embodiment of the present invention.
FIG. 9 illustrates a block diagram of a configuration of a mobile device in accordance with an exemplary embodiment of the present invention.

### DETAILED DESCRIPTION OF THE INVENTION

Exemplary, non-limiting embodiments of the present invention will now be described more fully with reference to the accompanying drawings. This invention may, however, be embodied in many different forms and should not be construed as limited to the exemplary embodiments set forth herein. Rather, the disclosed embodiments are provided so that this disclosure will be thorough and complete, and will fully convey the scope of the invention to those skilled in the art. The principles and features of this invention may be employed in varied and numerous embodiments without departing from the scope of the invention.

Furthermore, well known or widely used techniques, elements, structures, and processes may not be described or illustrated in detail to avoid obscuring the essence of the present invention. Although the drawings represent exemplary embodiments of the invention, the drawings are not necessarily to scale and certain features may be exaggerated or omitted in order to better illustrate and explain the present invention.

The present invention relates to a mobile device capable of a touch-based zooming and to a control method thereof. In an exemplary embodiment of the present invention, a zoom mode is activated in response to an interrupt which occurs on a touch sensitive surface such as any of a touch screen and a touch pad of the mobile device. Then, depending on a touch-based user gesture, a continuous zooming action is simply and rapidly performed around a user's desired point on target data displayed on a screen. Additionally, a conversion from an enlarging action to a reducing action of displayed target data, and vice versa, may be simply and rapidly made through an interrupt on a touch sensitive surface. That is, this invention allows adaptive toggling actions between scaling up and scaling down of display target data.

Among terms set forth herein, a touch-based user gesture refers to user's input actions made in particular ways defined by this invention for the purpose of a zooming control such as enlarging or reducing a displayed image. For instance, a gesture refers to a touch-based user's input motion which travels in a given pattern assigned to a zoom-in or zoom-out function in a zoom mode. In this invention, a gesture includes a long press event for activating a zoom mode, a move event for a zoom-in or zoom-out action in a zoom mode, a double tap event for returning to an initial state with a basic display size after a zoom-in or zoom-out action in a zoom mode, and a double tap event for a toggling function to obtain the effect of offering a preview image or a magnifier.

The direction of a move event may be defined as several types. That is, up and down directions may be assigned to a zoom-in and a zoom-out, respectively. Also, left and right directions may be alternatively used. And also, any directions including diagonal directions may be alternatively or additionally used.

Meanwhile, in an exemplary embodiment of this invention, a continuous zooming function does not provide a fixed selection of preset zooming rates (i.e., discontinuous zoom amounts like 10%, 20% or 200%), but to offer continuous zooming that allows a user's desired selection without limitation.

According to an exemplary embodiment of the present invention, the mobile device can receive a request for a zoom mode while performing a specific mode of operation. Then the mobile device can activate the zoom mode while maintaining the specific mode. Thereafter, the mobile device can detect a user gesture in the zoom mode and perform a real-time, continuous zoom-in or zoom-out action in response to the detected user gesture. A request for the zoom mode can be invoked through a long press input occurring at a specific point on a touch screen. Also, the zoom-in or zoom-out action can be performed around an occurrence point of a long press input or around a new point designated by a user after the activation of the zoom mode.

According to another embodiment of the present invention, the mobile device can receive a request for a toggle mode while performing a specific mode of operation. Then the mobile device can enlarge or reduce the display target data in response to an input event. That is, a real-time zoom-in or zoom-out can be performed for the display target data, depending on the occurrence of an input event. This input event can be invoked through a double tap input occurring at a specific point on a touch screen. Also, a zoom-in or zoom-out action can be performed around an occurrence point of a double tap input.

Therefore, the mobile device having a touch screen in an exemplary embodiment of this invention can support a continuous zooming function through a single touch action using a finger or a stylus pen. Additionally, such a continuous zooming function can be performed around a user's desired point. That is, a focus of a continuous zooming function can be centered on a user's desired position.

Besides, in an exemplary embodiment of the present invention, a special function key or a shortcut menu item can be used to activate a zoom mode.

Now, described hereinafter are a mobile device capable of a touch-based zooming and a control method thereof, in accordance with exemplary embodiments of this invention. Embodiments given below are, however, exemplary only and are not to be considered as a limitation of the present invention. As will be understood by those skilled in the art, many other embodiments or variations are also possible.

Furthermore, described hereinafter are cases where the mobile device has a touch screen as a touch sensitive surface and a zooming control is based on the touch screen. The present invention is, however, not limited to such cases. A touch pad or any other equivalents can be used alternatively or additionally for the zooming control to be discussed below.

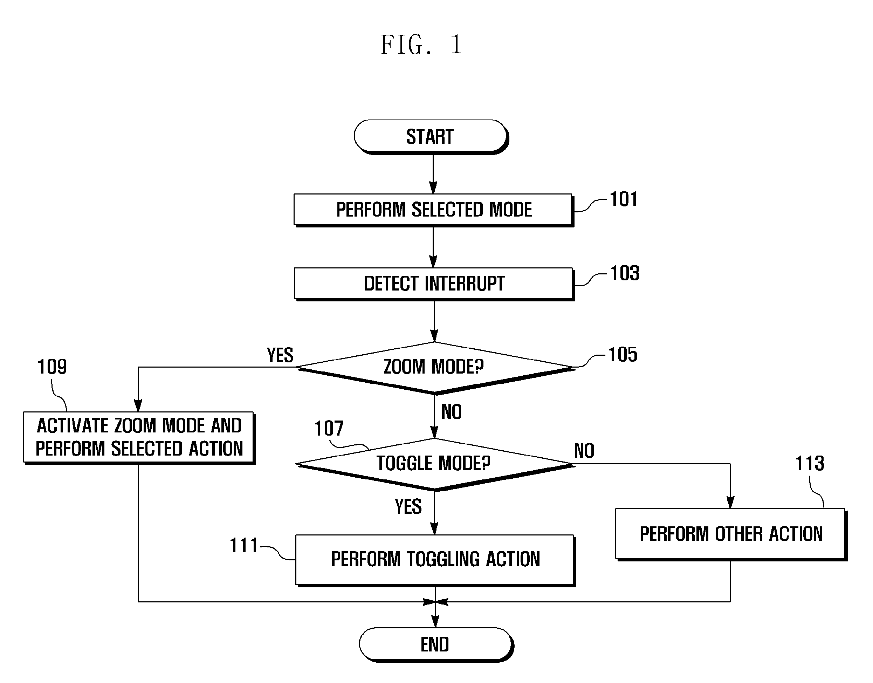

FIG. 1 illustrates a flow diagram of a method for a touch-based zooming control in a mobile device in accordance with an exemplary embodiment of the present invention.

Referring to FIG. 1, while performing a selected mode (step 101), the mobile device can detect the occurrence of an interrupt (step 103). A selected mode set forth in the step 101 refers to a particular mode that allows displaying some kind of display target data outputted while a specific application selected at a user's request runs in the mobile device, including any of a web page display mode based on a web browser function or environment, a photo data display mode based on a camera function or environment, a text display mode based on a document viewer function or environment. Also, display target data refers to any kind of contents or files displayed in a visual form on a touch screen. In addition, an interrupt set forth in the step 103 refers to a signal or instructions, inputted through a touch screen or a special function key by a user, to stop the execution of a running application.

After detecting an interrupt, the mobile device determines whether an interrupt is a request for a zoom mode (step 105) or is a request for a toggle mode (step 107). For instance, the mobile device can determine whether an interrupt is a long press input or a double tap input which occurs at a specific point on display target data.

If an interrupt is a request for the zoom mode as the result of determination in the step 105, the mobile device activates the zoom mode and then performs a selected action of a zooming function in response to a touch-based user gesture in the zoom mode (step 109). Such actions in the zoom mode will be described in detail later.

If an interrupt is a request for a toggle mode as the result of determination in the step 107, the mobile device performs a selected toggling action in response to a touch-based user gesture in the toggle mode (step 111). Such actions in the toggle mode will be also described in detail later.

However, if an interrupt is neither a request for the zoom mode nor a request for the toggle mode as the results of determination in the steps 105 and 107, the mobile device performs another action in response to an interrupt (step 113). For instance, if an interrupt is a request for a specific menu, the mobile device displays the requested menu. Also, if an interrupt is a selection input for a specific icon, the mobile device one of launches and enables an application or a function which is assigned to the selected icon.

Now, a detailed process of executing a zooming function in the zoom mode or in the toggle mode according to an exemplary embodiment of the present invention will be described.

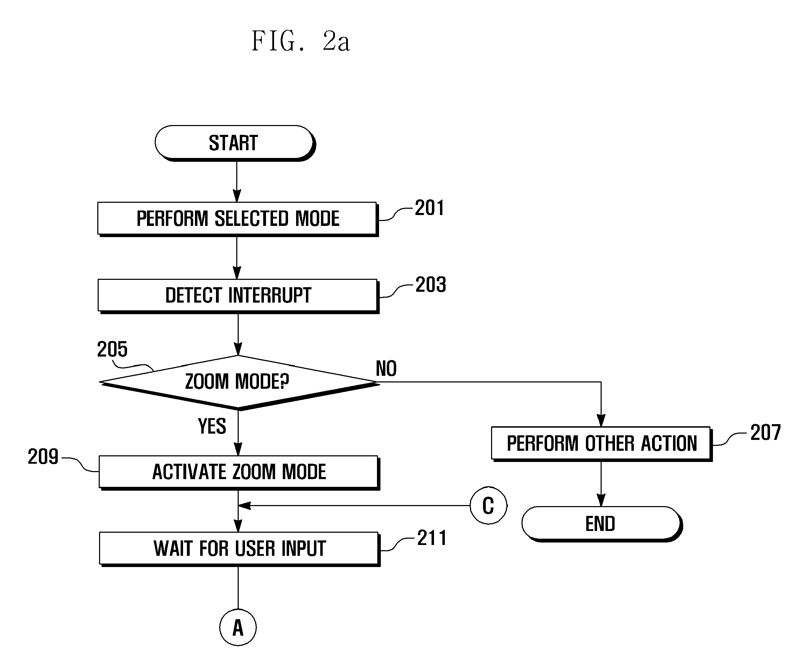

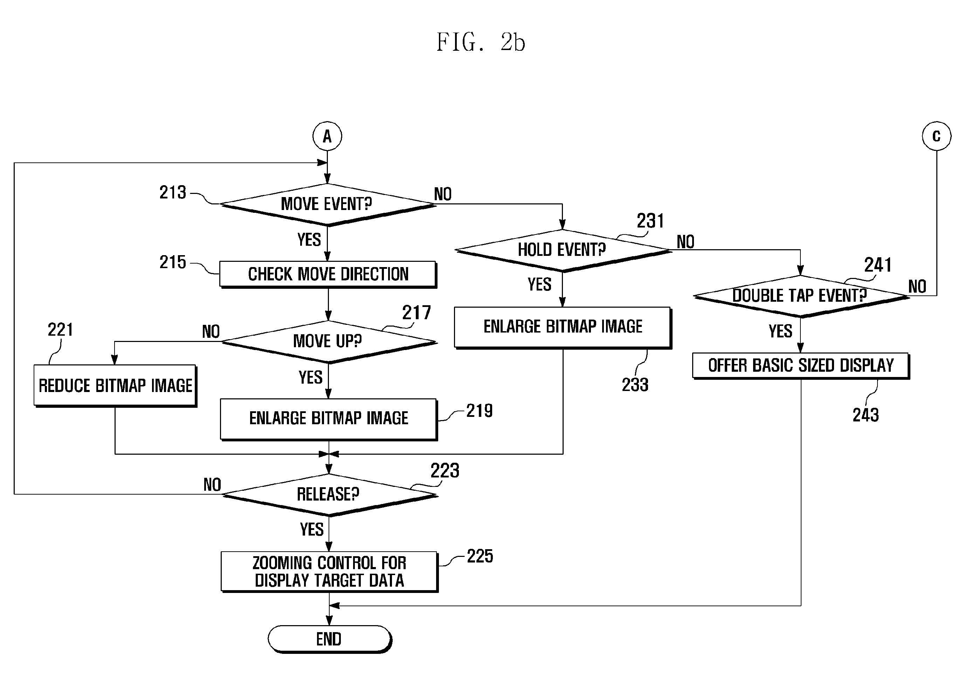

FIGS. 2A and 2B illustrate a flow diagram of a method for a touch-based zooming control in the zoom mode of a mobile device in accordance with an exemplary embodiment of the present invention.

Referring to FIGS. 2A and 2B, while performing a selected mode (step 201), the mobile device detects the occurrence of an interrupt (step 203). As discussed above, a selected mode refers to a particular mode that allows displaying some kind of display target data outputted while a specific application selected at a user's request runs in the mobile device. Also, a selected mode can include a web page display mode based on but not limited to any of a web browser function or environment, a photo data display mode based on a camera function or environment, and a text display mode based on a document viewer function or environment. Furthermore, display target data refers to at least one of any kind of contents and files displayed in a visual form on a touch screen. In addition, an interrupt refers to a signal or instructions, inputted through at least one of a touch screen and a special function key by a user, to stop the execution of a running application.

After detecting an interrupt, the mobile device determines whether an interrupt is a request for activating the zoom mode (step 205). For instance, the mobile device can determine whether an interrupt is a long press input which occurs at a specific point on display target data outputted in a current mode.

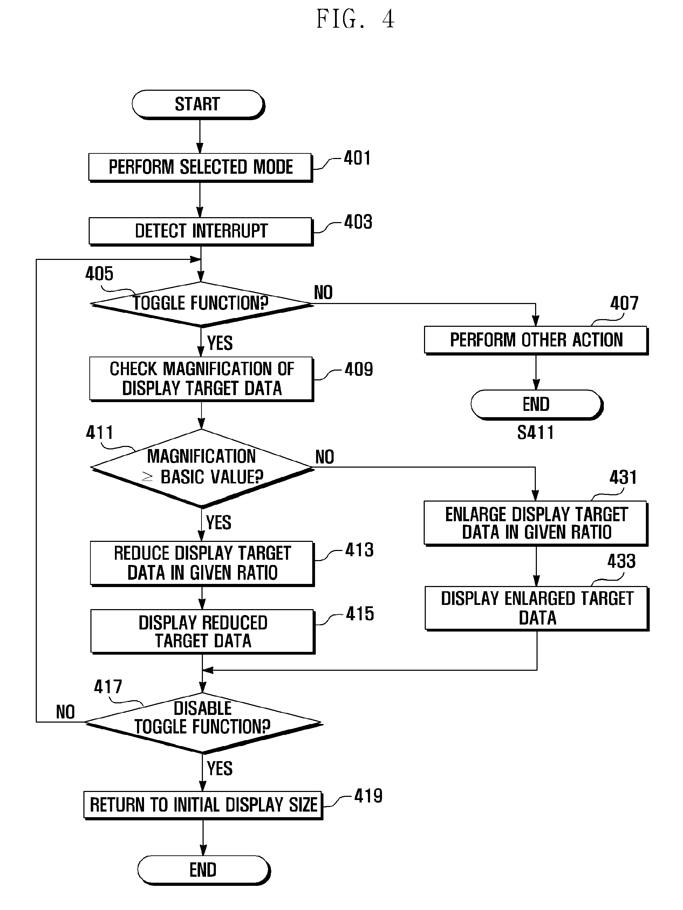

If an interrupt is not a request for the activation of the zoom mode as the result of determination in the step 205, the mobile device can perform some action in connection with an interrupt (step 207). For instance, if an interrupt is a request for a specific menu, the mobile device displays the requested menu. Also, if an interrupt is a selection input for a specific icon, the mobile device one of launches and enables one of an application and a function which is assigned to the selected icon. Meanwhile, if an interrupt is a request for the toggle mode, the mobile device performs appropriate actions in the toggle mode as will be described with reference to FIG. 4.

If an interrupt is a request for the activation of the zoom mode as the result of the determination in the step 205, the mobile device activates the zoom mode (step 209) and then waits for a user input, especially based on a gesture (step 211). Specifically, in these steps, the mobile device activates the zoom mode while the display of target data is maintained, and can form an overlay layer on display target data. This overlay layer is suitably configured to receive a user gesture input. Additionally, when the zoom mode is activated, the mobile device can offer some graphical element in a visible manner so that a user can perceive intuitively the activation of the zoom mode. A related example will be described later.

According to an exemplary embodiment of the present invention, the mobile device can wait for a user input for a given time in the aforesaid step 211. That is, the mobile device can measure the passage of time until a user gesture input is detected. If no user input is detected within a given time, the mobile device can inactivate the zoom mode.

If detecting a user gesture, namely, if receiving an input event from a user through the touch screen, the mobile device determines the type of an input event (steps 213, 231 and 241). That is, the mobile device determines whether an input event is one of a move event (step 213), a hold event (step 231), and a double tap event (step 241). If the input event corresponds to none of them, the mobile device disregards the received input event and then proceeds to the previous step 211.

If an input event is the move event as the result of determination in the step 213, the mobile device checks a move direction (step 215) and thereby determines whether the move event is one of a move up event and a move down event) (step 217). Here, a move direction refers to the direction toward which the move event advances.

If the move event is the move up event as the result of determination in the step 217, the mobile device enlarges a bitmap image of display target data according to a travel distance of the move event (step 219). That is, the mobile device executes a continuous zoom-in function in response to the progress of the move event. At this time, a starting point of the move event can become a central point for the zoom-in action.

A bitmap image is one of image types used to generate a digital image. Normally a bitmap image expresses each individual point on display target data as pixels in the Cartesian coordinate system. Therefore, a scaling up and down of a bitmap image is based on pixels in the Cartesian coordinate system. By the way, in an enlarged bitmap image, each point on display target data may have unfavorably stair-like boundaries due to a scaling up. In order to smooth such boundaries, well known algorithms (for example, Bicubic filtering, Bilinear filtering, etc.) are be used. Although a bitmap image is used in an exemplary embodiment set forth herein, this is exemplary only and not to be considered as a limitation of the present invention. As will be understood by those skilled in the art, any other image type including image types such as Joint Photographic Experts Group (JPEG), Graphics Interchange Format (GIF), Portable Network Graphics (PNG), and so forth can be alternatively used for this invention.

If the move event is a move down event as the result of determination in the step 217, the mobile device reduces a bitmap image of display target data according to a travel distance of the move event (step 221). That is, the mobile device executes a continuous zoom-out function in response to the progress of the move event. At this time, a starting point of the move event can become a central point of such a zoom-out.

In the above-discussed steps 217 to 221, one of the zoom-in action and zoom-out action is performed depending on the move event which directs one of an upward and downward direction. This is, however, exemplary only and not to be considered as a limitation of the present invention. Any other various directions of a move event can be assigned to such zoom-in and zoom-out functions according to user's settings. For instance, the move event in a left direction may be assigned to the zoom-in function, whereas the move event in a right direction may be assigned to the zoom-out function. Also, any two move events in diagonal directions may be assigned to the zoom-in function and the zoom-out function, respectively. And also, any two move events in all directions may be respectively assigned to the zoom-in function and the zoom-out function. Such relations can be one of predefined as default and varied according to user's setting. Related examples are shown in the following Table 1.

**[Table 1]**

| Move Event | Direction | Function |
|---|---|---|
| Up and Down | Up | Zoom In |
| | Down | Zoom Out |
| Left and Right | Left | Zoom In |
| | Right | Zoom Out |
| Diagonal | Up-and-left, Up-and-right | Zoom In |
| | Down-and-left, Down-and-right | Zoom Out |
| All Directions | Up, Left, Up-and-left, Up-and-right | Zoom In |
| | Down, Right, Down-and-left, Down-and-right | Zoom Out |

Referring again to FIGS. 2A and 2B, while executing one of the zoom-in and zoom-out function in response to the move event, the mobile device determines whether the move event is released from the touch screen (step 223).

If there is no release as the result of determination in the step 223, the mobile device returns to the previous step 213 to continuously determine the type of another input event. However, if the move event is released as the result of determination in the step 223, the mobile device executes a zooming control associated with display target data, including a selected portion of target content, outputted according as a selected mode is performed (step 225). That is, depending on a zooming rate of a bitmap image, the mobile device enlarges or reduces display target data displayed on the touch screen. At this time, a specific point selected by a user becomes a central point of the zooming control.

Meanwhile, if an input event is a hold event as the result of determination in the step 231, the mobile device enlarges a bitmap image around an occurrence point of the hold event at given periodic intervals (step 233). That is, the mobile device executes a continuous zoom-in function in response to the duration of the hold event. At this time, an occurrence point of the hold event can become a central point of the continuous zoom-in action. In this step 233, a given periodic interval refers to the amount of time defined by a user. If the periodic interval is set for two seconds, the mobile device can perform a zooming control associated with a bitmap image at intervals of two seconds after the hold event occurs.

Next, while executing the continuous zoom-in function in response to the hold event, the mobile device determines whether the hold event is released (step 223).

If there is no release as the result of a determination in the step 223, the mobile device returns to the previous step 213 to continuously determine the type of another input event. However, if the hold event is released as the result of the determination in the step 223, the mobile device executes a zooming control associated with display target data, including a selected portion of target content outputted according to a selected mode, being performed (step 225). That is, depending on a zooming rate of a bitmap image, the mobile device enlarges or reduces display target data displayed on the touch screen. At this time, a specific point selected by a user becomes the central point of such a zooming control.

On the other hand, if an input event is a double tap event as the result of determination in the step 241, the mobile device offers display target data with a predefined basic size (step 243). That is, the mobile device converts one of an enlarged and reduced size of display target data to a predefined original size. In an exemplary embodiment of the present invention, the mobile device can inactivate the zoom mode in response to the double tap event.

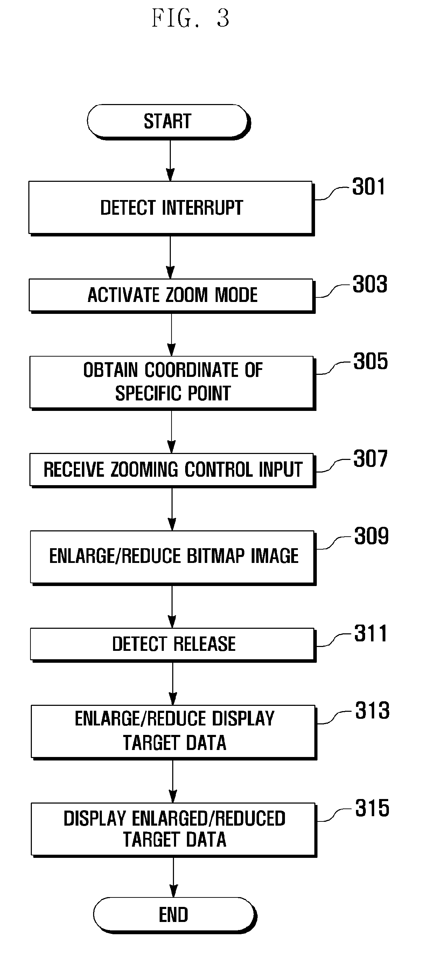

FIG. 3 illustrates a flow diagram of a method for displaying display target data depending on a touch-based zooming control in a mobile device in accordance with an exemplary embodiment of the present invention.

Referring to FIG. 3, when detecting an interrupt for activating a zoom mode (step 301), the mobile device activates the zoom mode in response to the interrupt (step 303). Then the mobile device obtains the coordinates of a specific point of one of where the interrupt is requested and where a user's next input occurs after the activation of the zoom mode (step 305).

Thereafter, when a user gesture for a zooming control is inputted in the zoom mode (step 307), the mobile device executes a zooming function associated with a bitmap image of display target data in response to a gesture input (step 309). That is, depending on the type of gesture input, the mobile device performs one of a zoom-in and zoom-out action with regard to the bitmap image of display target data. At this time, the coordinates of the specific point obtained in the above step 305 are used as a central point of the zoom-in or zoom-out action.

While executing the zooming function associated with the bitmap image, the mobile device detects a gesture release (step 311). Then the mobile device executes the zooming function associated with display target data (e.g., content) according to a zooming rate of the bitmap image (step 313). That is, depending on one of an enlargement and reduction ratio of the bitmap image, the mobile device one of enlarges and reduces display target data to be displayed. Thereafter, the mobile device displays one of an enlarged and reduced display target data, respectively, on the touch screen (step 315).

Described hereinbefore is a process of executing the zooming function in the zoom mode. Now, a detailed process of executing the zooming function in a toggle mode according to an exemplary embodiment of the present invention will be described.

FIG. 4 illustrates a flow diagram of a method for a touch-based zooming control in the toggle mode of a mobile device in accordance with an exemplary embodiment of the present invention.

Referring to FIG. 4, while performing a selected mode (step 401), the mobile device detects the occurrence of an interrupt (step 403). Since the selected mode and an interrupt have already been discussed with regard to FIGS. 2A to 3, related descriptions are omitted herein.

After detecting the interrupt, the mobile device determines whether the interrupt is a request for executing a toggling function (step 405). For instance, the mobile device can determine whether an interrupt is a double tap input which occurs at a specific point on display target data outputted in a current mode.

If the interrupt is not a request for the execution of the toggling function as the result of determination in the step 405, the mobile device performs some action in connection with the interrupt (step 407). For instance, if the interrupt is a request for a specific menu, the mobile device displays the requested menu. Also, if the interrupt is a selection input for a specific icon, the mobile device one of launches and enables one of an application and a function which is assigned to the selected icon. Meanwhile, if the interrupt is a request for the activation of the zoom mode, the mobile device performs appropriate actions in the zoom mode as discussed earlier with reference to FIGS. 2A to 3.

If an interrupt is a request for the execution of a toggling function as the result of determination in the step 405, the mobile device checks the magnification of display target data currently displayed (step 409). That is, the mobile device ascertains the ratio of the display size of currently displayed data to the display size of original data. Then the mobile device determines whether the magnification value of display target data is greater than or equal to a given basic value (step 411).

Here, a given basic value refers to a particular magnification value normally used when the mobile device displays target data on the screen. In the above steps 409 and 411, the mobile device can determine whether display target data is displayed in one of at a basic magnification value, at an enlarged ratio greater than a basic magnification value, or at a reduced ratio smaller than a basic magnification value.

As the result of determination in the step 411, if the magnification value of display target data is one of greater than and equal to a given basic value, the mobile device reduces display target data according to a given reduction ratio (step 413) and then displays reduced display target data (step 415). That is, if receiving a user's request for the toggling function while displaying certain display target data at a specific magnification value one of greater than and equal to a basic magnification value, the mobile device performs a scaling down of display target data. Here, such a scaling down of display target data complies with a given reduction ratio. Also, if such a reduction ratio is fixed at the minimum magnification value, the mobile device can obtain the effect of offering a preview image. For instance, when a page of a document is partly displayed at a basic magnification value through a text viewer function, the mobile device can reduce a document page to the minimum magnification value in response to a double tap input and thereby display the entire single page of a document.

While displaying reduced display target data, the mobile device determines whether there is a request for disabling the toggle function (step 417). If there is a request for disabling a toggle function, the mobile device converts a reduced size of display target data to a previous size before the data was toggled (step 419). That is, a display size of display target data reduced in the previous steps 413 and 415 returns to an initial size in the previous step 401 before the toggle function is enabled. Alternatively, when the toggle function is disabled, a display size of display target data may return to a given basic value. In some embodiments, although the toggle function is disabled, display target data may remain reduced.

If there is no request for disabling the toggle function as the result of determination in the step 417, the mobile device proceeds to the previous step 405. Additionally, after returning to the step 405, the mobile device can pass through the step 411 and then proceed to the step 431 in another branch. That is, if certain display target data reduced in the steps 413 and 415 enters into the step 411 via the steps 417 and 405, the magnification value thereof can become smaller than a given basic value. In this case, the mobile device can perform a process of enlarging display target data by entering into the step 431. Through this enlarging process, display target data can return to one of a given basic magnification value and a certain magnification value greater than a basic value. In the former case, namely, if returning to a given basic value through an enlarging process, display target data reduced in response to a first toggling input may return to a given basic value in response to a second toggling input. Accordingly, this invention can allow adaptive toggling actions between any of scaling up and scaling down of display target data.

Meanwhile, as the result of determination in the step 411, if the magnification value of display target data is smaller than a given basic value, the mobile device enlarges display target data according to a given enlargement ratio (step 431) and then displays enlarged display target data (step 433). That is, if receiving a user's request for the toggle function while displaying certain display target data at a specific magnification value smaller than a basic magnification value, the mobile device performs a scaling up of display target data. Here, such a scaling up of display target data complies with a given enlargement ratio. Also, if such an enlargement ratio is fixed at the maximum magnification value, the mobile device can obtain the effect of offering a magnifier. For instance, when a page of a document is displayed at a relatively smaller magnification value through a text viewer function, the mobile device can enlarge a selected portion of a document page to the maximum magnification value in response to a double tap input.

While displaying enlarged display target data, the mobile device determines whether there is a request for disabling the toggle function (step 417). If there is a request for disabling the toggle function, the mobile device converts an enlarged size of display target data to a previous size before toggled (step 419). That is, a display size of display target data enlarged in the previous steps 431 and 433 returns to an initial size in the previous step 401 before the toggle function is enabled. Alternatively, when the toggle function is disabled, a display size of display target data can return to a given basic value. In some embodiments, although the toggle function is disabled, display target data can remain reduced. Also, if certain display target data is reduced in the steps 413 and 415, and if a process returns to the step 405 and proceeds to the step 431, a display size of display target data enlarged in the steps 431 and 433 can return, in the step 419, to a reduced size in the steps 413 and 415.

If there is no request for disabling the toggle function as the result of determination in the step 417, the mobile device proceeds to the previous step 405. Additionally, after returning to the step 405, the mobile device may pass through the step 411 and then proceed to the step 413 in another branch. That is, if certain display target data enlarged in the steps 431 and 433 enters into the step 411 via the steps 417 and 405, the magnification value thereof can become one of greater than and equal to a given basic value. In this case, the mobile device can perform a process of reducing display target data by entering into the step 413. Accordingly, this invention can allow adaptive toggling actions between any of scaling up and scaling down of display target data.

Described hereinbefore is a method for a touch-based zooming control in a mobile device in accordance with embodiments of the present invention. Now, practical examples associated with the above-discussed zooming control will be described. The following examples are, however, exemplary only and are not to be considered as a limitation of the present invention. As will be understood by those skilled in the art, many other examples and variations are also possible.

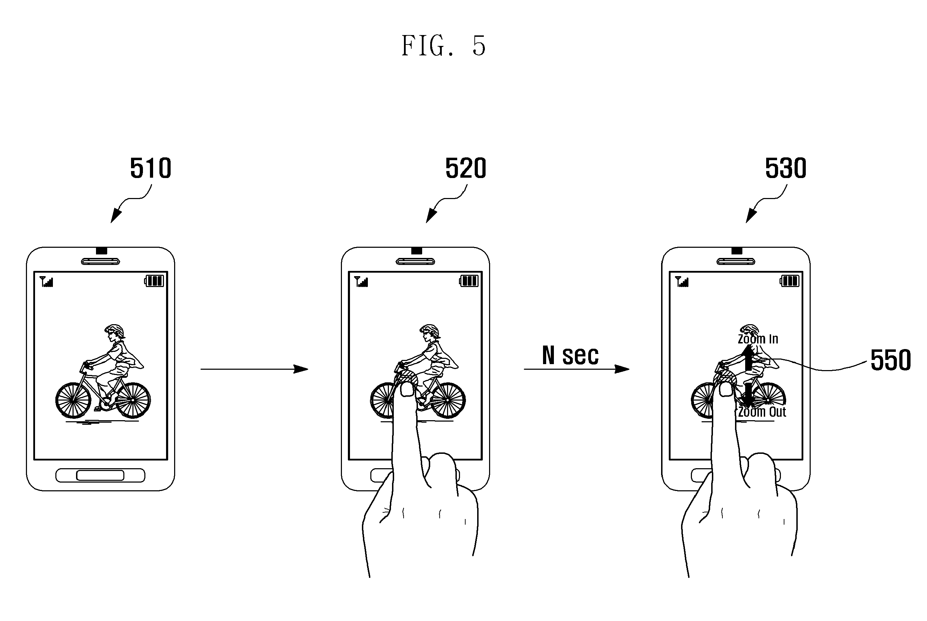

FIG. 5 illustrates an example of a process of activating a zoom mode of a mobile device in accordance with an exemplary embodiment of the present invention.

Referring to FIG. 5, as indicated by a reference number 510, the mobile device displays target data of specific content on the screen in a selected mode. FIG. 5 exemplarily shows that certain image data is displayed in an image viewer environment.

Next, as indicated by a reference number 520, a user may invoke an input event for activating the zoom mode at a selected point on display target data of content. Here, an input event is a touch action which occurs on the touch screen. Particularly, FIG. 5 exemplarily illustrates a case where a long press input is assigned to an input event for the activation of the zoom mode. In this case, a user can invoke an input event at a desired position to be used as a central point of a zooming action.

When an input event is received, the mobile device activates the zoom mode in response to the input event. At this time, as indicated by a reference number 530, the mobile device can maintain the display of target data. Also, the mobile device can offer some graphical element 550 in a visible manner so that a user can perceive intuitively the activation of the zoom mode. Such a graphical element 550 can be displayed at the same position as the input event occurs. Alternatively, this element 550 can be displayed somewhere near an occurrence point of the input event. In addition, any further information can be offered together with such an element 550 in order to inform selectable zooming actions and their gesture directions. The display of such a graphical element 550 is optional depending on user's setting.

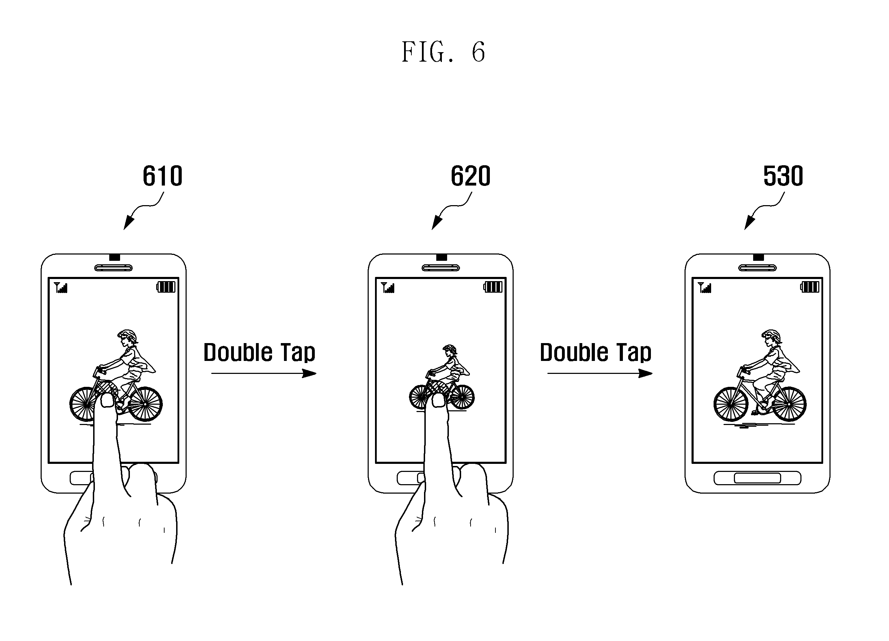

FIG. 6 illustrates a process of executing a toggle function in a mobile device in accordance with an exemplary embodiment of the present invention.

Referring to FIG. 6, as indicated by a reference number 610, the mobile device displays target data of specific content on the screen in a selected mode. FIG. 6 exemplarily shows that certain image data is displayed in an image viewer environment.

Next, in a state 610, a user can invoke an input event for executing a toggle function at a selected point on displayed target data of the specific content. Here, the input event is a touch action which occurs on the touch screen. Particularly, FIG. 6 exemplarily shows a case where a double tap input is assigned to an input event for the execution of the toggle function.

When an input event is received, the mobile device executes the toggle function in response to the received input event. Here, the mobile device can check the magnification value of display target data offered in the above state 610. Then, as indicated by a reference number 620, the mobile device reduces display target data according to a given reduction ratio when the magnification value thereof is one of greater than and equal to a given basic value.

Next, in a state 620, a user can invoke again another input event for executing the toggle function. That is, a double tap input may occur at a selected point on display target data. When this input event is received, the mobile device executes the toggle function in response to the input event. Here, the mobile device can check the magnification value of display target data offered in the above state 620. Then, as indicated by a reference number 630, the mobile device enlarges display target data according to a given enlargement ratio when the magnification value thereof is smaller than a given basic value.

Through the above enlarging process, the magnification value of display target data can return to one of a given basic value and a certain magnification value greater than a basic value. If the first display target data before reduced (namely, display target data shown in 610) has a basic magnification value, and if an enlargement ratio indicates returning to a basic magnification value, the second display target data reduced in response to the first toggling input shown in 610 (namely, display target data shown in 620) can return to the first display target data in response to the second toggling input shown in 620.

Now, a process of executing a zooming function depending on a user gesture while a zoom mode is activated as illustrated in FIG. 5 will be described.

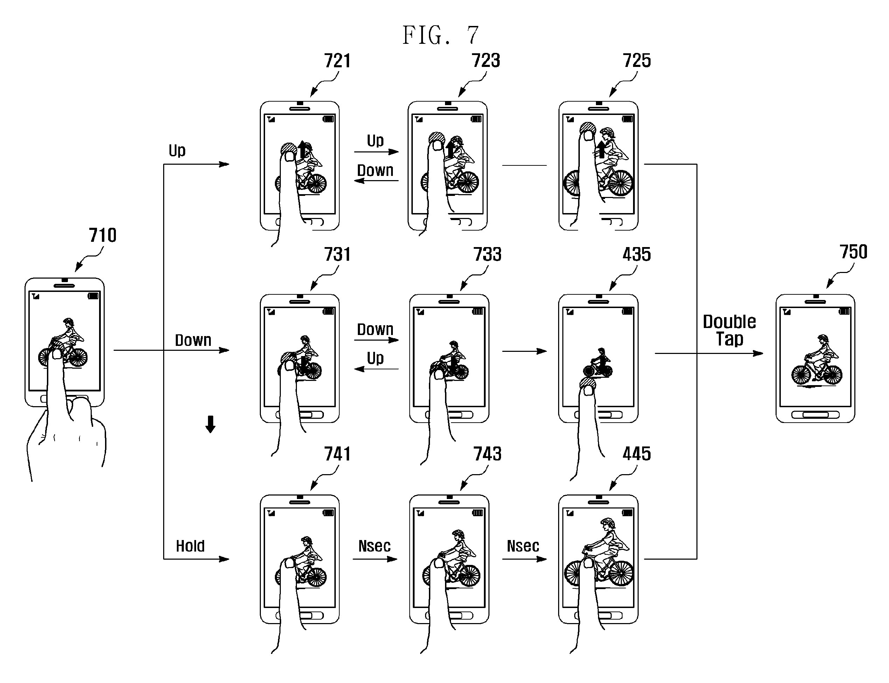

FIG. 7 illustrates a process of executing the zooming function depending on a touch-based user gesture in a mobile device in accordance with an exemplary embodiment of the present invention.

Referring to FIG. 7, as indicated by a reference number 710, the mobile device can activate the zoom mode in response to a specific user gesture as discussed earlier in FIG. 5. After the zoom mode is activated, a user can manipulate the mobile device to perform a continuous zooming function (namely, a zoom-in or a zoom-out) through an appropriate gesture such as a move event or a hold event.

In the first place, reference numbers 721, 723 and 725 show a continuous zoom-in action depending on a move event. As shown, a user can continuously invoke a move up event at a selected point. Then the mobile device executes a continuous zoom-in function around the selected point in response to the progress of a continuous move up event.

In such a zoom-in process, the mobile device continuously offers a real-time, scaled-up bitmap image on the screen in response to the progress of the continuous move up event. When such a move up event is released from the screen, the mobile device displays enlarged display target data around the selected point on the touch screen, depending on a zoom-in ratio of a bitmap image.

Occasionally, a user can invoke a move down event in the above zoom-in process based on the move up event. Then the mobile device can execute a continuous zoom-out function around the selected point in response to the progress of a continuous move down event, as shown from 723 to 721.

Meanwhile, a user may release a move up event from the screen in the above zoom-in process based on the move up event. Then, in response to such a touch release, the mobile device displays enlarged display target data around the selected point on the touch screen. Thereafter, a user can invoke a double tap event on the screen. Then, in response to the double tap event, the mobile device displays target data with a given basic magnification value, as indicated by a reference number 750.

In the second place, reference numbers 731, 733 and 735 show a continuous zoom-out action depending on a move event. As shown, a user can continuously invoke a move down event at a selected point. Then the mobile device executes a continuous zoom-out function around the selected point in response to the progress of a continuous move down event.

In such a continuous zoom-out process, the mobile device continuously offers a real-time, scaled-down bitmap image on the screen in response to the progress of the continuous move down event. When such a move down event is released from the screen, the mobile device displays reduced display target data around the selected point on the touch screen, depending on a zoom-out ratio of a bitmap image.

Occasionally, a user may invoke a continuous move up event in the above zoom-out process based on the move down event. Then the mobile device can execute a continuous zoom-in function around the selected point in response to the progress of the continuous move up event, as shown from 733 to 731.

Meanwhile, a user can release the move down event from the screen in the above zoom-out process based on the move down event. Then, in response to such a touch release, the mobile device displays reduced display target data around the selected point on the touch screen. Thereafter, a user can invoke a double tap event on the screen. Then, in response to the double tap event, the mobile device displays target data with a given basic magnification value, as indicated by the reference number 750.

In the third place, reference numbers 741, 743 and 745 show a continuous zoom-in action depending on a hold event. As shown, a user can invoke the hold event at a selected point through a touch input such as tap and hold. Then the mobile device executes a continuous zoom-in function around the selected point at given periodic intervals while the hold event continues. Here, a periodic interval can be one of predefined and depend on user's setting. For instance, if a periodic interval is set for N seconds, the mobile device can perform a zooming control at intervals of N seconds while the hold event continues.

In such a zoom-in process, the mobile device continuously offers a real-time, scaled-up bitmap image on the screen in response to the duration of the hold event. When the hold event is released from the screen, the mobile device displays an enlarge display target data around the selected point on the touch screen, depending on a zoom-in ratio of a bitmap image.

That is, a user can release a hold event from the screen in the above zoom-in process based on the hold event. Then, in response to such a touch release, the mobile device displays an enlarged display target data around the selected point on the touch screen. Thereafter, a user can invoke a double tap event on the screen. Then, in response to the double tap event, the mobile device displays target data with a given basic magnification value, as indicated by the reference number 750.

Meanwhile, the above-discussed case the hold event is assigned to a continuous zoom-in function is an exemplary case only. In another case, the hold event may be alternatively assigned to a continuous zoom-out function.

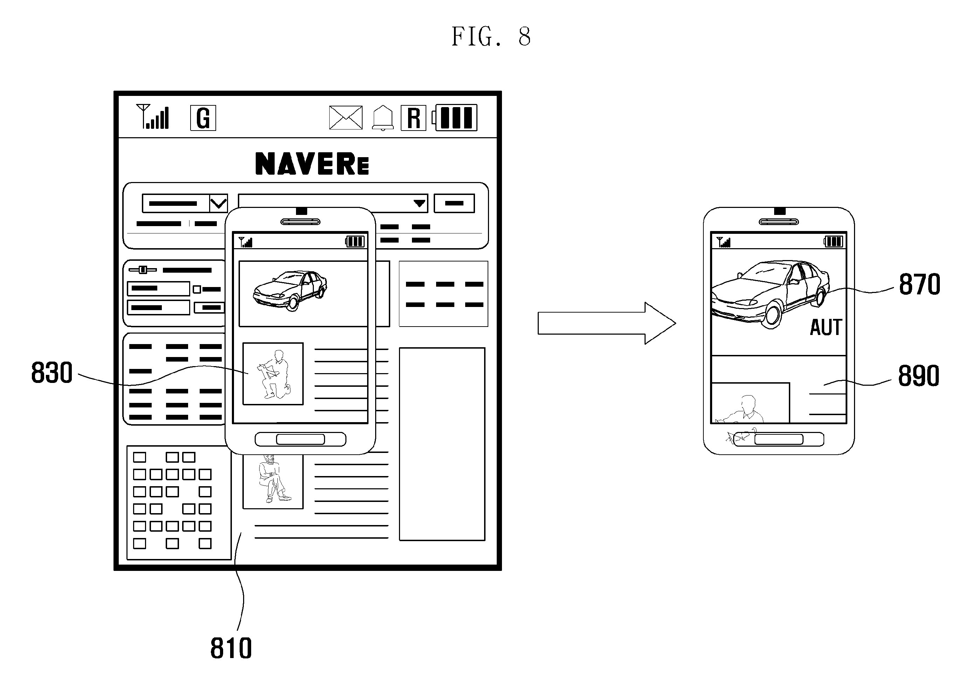

FIG. 8 illustrates a process of executing a zooming function depending on a bitmap image in a mobile device in accordance with an exemplary embodiment of the present invention.

Referring to FIG. 8, a reference number 810 indicates a bitmap image. Also, a reference number 830 indicates a portion of a bitmap image actually displayed on the screen of the mobile device. And also, a reference number 870 indicates display target data which is an enlarged portion of content.

According to an embodiment of the present invention, the mobile device can use the bitmap image 810 to offer a zoomed display image outputted in response to a user gesture in a zoom mode. If a display image is offered through one of the enlargement and reduction of actual content, such actions may often fail to keep up with a progress speed of a gesture. In this case, in the prior art, a user who invokes a certain gesture for zooming may not ascertain an enlarged or reduced image for some time. However, the present invention can allow a rapid zooming control by offering an enlarged or reduced display target data on the screen through the bitmap image 810 of currently displayed content.

Specifically, the mobile device controls a zooming action by using the bitmap image 810 when executing a zooming function in response to a user gesture. Also, the mobile device offers display target data one of enlarged or reduced depending on the bitmap image 810. In particular, display target data actually displayed on the screen is a portion 830 of the bitmap image 810 one of enlarged and reduced around a user's selected point. This portion 830 will be referred to as a viewport.

The viewport 830 can represent each individual point on any of an enlarged and a reduced bitmap image 810 as pixels in the Cartesian coordinate system. If the bitmap image 810 is enlarged, each point thereon may have stair-like boundaries due to a scaling up. Thereafter, when a user gesture is released, the mobile device modifies certain target data 870 of content according to an enlargement or reduction ratio of the bitmap image 810 and then displays the modified target data 870. That is, the mobile device performs a redrawing action for actual content by using new zoom factor values modified with the bitmap image 810. Therefore, a user can perceive real-time variations of display target data in response to a continuous zooming action.

Now, as illustrated in FIG. 8, an example of a zooming action associated with web display data in a web browser environment will be described. Normally web display data can contain a variety of link information about any of a transfer to other web page and a file download. In such display target data, a process of a zoom-in or zoom-out action is as follows.

Assume that that the viewport 830 contains a particular link assigned to certain text "AUTO" with coordinate (x1, y1). Furthermore, assume that web display data is enlarged several times as indicated by a reference number 870. In such a case, a conventional technique should repeatedly perform a conversion operation for the coordinate of "AUTO" with link information whenever one of enlarging and reducing the display target data in response to a user' request. Unfortunately, this may cause a serious delay in displaying any of enlarged and reduced target data, thus failing to offer real-time variations of display target data on the screen.

Contrary to that, in the present invention, the mobile device memorizes the coordinate (x1, y1) of "AUTO" when one of enlarging and reducing the display target data in response to a user's request. Then the mobile device performs a processing of a continuous zooming action by using the bitmap image and offers the display target data one of and enlarged and reduced according to a corresponding enlargement and reduction ratio of the bitmap image when a gesture release is detected. Particularly, when offering the display target data, the mobile device performs a rendering process in which the memorized coordinate (x1, y1) of "AUTO" is matched with the coordinate of a new position according to one of an enlargement and reduction ratio of the bitmap image. This can eliminate unexpected errors in link information due to one of an enlargement and reduction of the display target data. Additionally, this can reduce a burden of unnecessary operations required for a zooming action and offers real-time variations of the display target data on the screen.

In the meantime, although not illustrated in the drawings, the mobile device according to an embodiment of the present invention can offer a plurality of further information on the touch screen to inform a user whether a gesture is available. For instance, any move path information can be displayed corresponding to a path produced by one of a movement of a user's finger and a stylus pen on the touch screen. The display of such move path information is depends on user's setting.

Hereinbefore, a method for a touch-based zooming control in a mobile device having a touch screen in accordance with an embodiment of the present invention has been described together with related examples. Now, a mobile device for executing the above method will be described. The following descriptions are, however, exemplary only and are not to be considered as a limitation of the present invention. As will be understood by those skilled in the art, many other variations may be also possible.

The mobile device according to this invention includes a plurality of electronic devices having a touch sensitive surface such as one of a touch screen and a touch pad. For instance, the mobile device of this invention can include, but not be limited to, a plurality of mobile communication terminals based on a plurality of communication protocols in a plurality of communication systems. Also, the mobile device of the present invention can include, but is not limited to, a device selected from the group comprising a portable multimedia player (PMP), a digital broadcasting player, a personal digital assistant (PDA), a game console, a smart phone, a music player, a car navigation system, and any other kinds of portable and handheld devices.

Particularly, the mobile device of the present invention includes a display unit, an input unit, and a control unit. The display unit is configured to display target data of selected content that is one of enlarged and reduced depending on a zooming function. The input unit is configured to receive a touch-based input event for executing the zooming function around a specific point on the target data when a zoom mode is activated. The control unit is configured to execute the zooming function associated with a bitmap image of the target data and to control the zooming function associated with the target data according to at least one of an enlargement and reduction ratio of the bitmap image. Additionally, the input unit has at least one of a touch screen and a touch pad. Now, an exemplary embodiment of the mobile device of the present invention having a touch screen will be described.

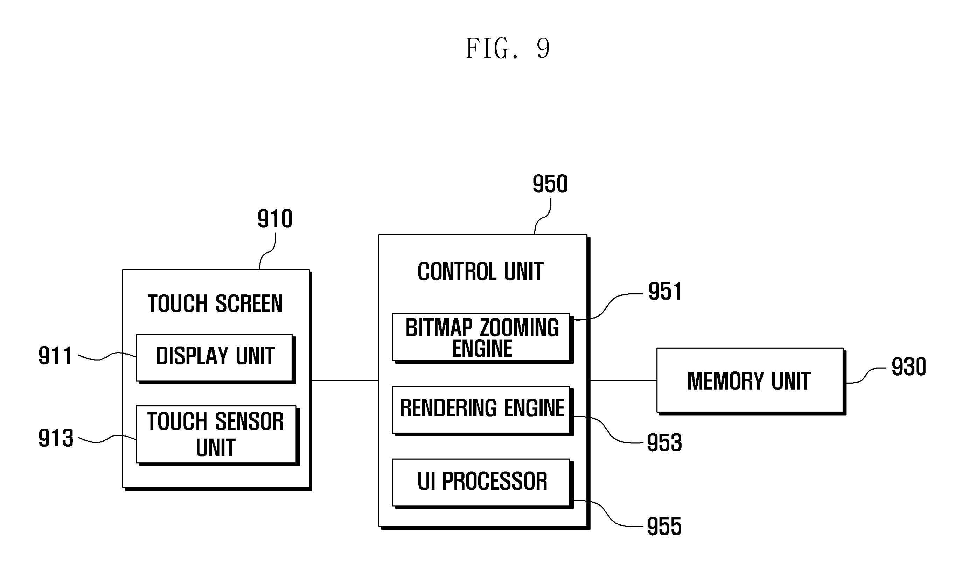

FIG. 9 illustrates a configuration of a mobile device in accordance with an exemplary embodiment of the present invention.

Although FIG. 9 exemplarily shows a touch screen 910 composed of a display unit 911 and a touch sensor unit 913, the present invention is not limited to the above. Alternatively, instead of the touch screen 910, the mobile device can have the display unit 911 and a touch pad (not shown) which are separated from the display unit 911 and are independently configured to receive a user gesture. In other words, the touch sensor unit 913 used as an input unit for receiving a touch-based user gesture can be included in any of the touch screen 910 and the touch pad (not shown). Occasionally, the mobile device comprises both the touch screen 910 and the touch pad (not shown). In this case, a touch-based user gesture can be inputted through at least one of the touch screen 910 and the touch pad (not shown).

Referring to FIG. 9, the mobile device according to an embodiment of the present invention includes the touch screen 910, a memory unit 930, and a control unit 950. As mentioned above, the touch screen 910 has the display unit 911 and the touch sensor unit 913. Also, the control unit 950 has a bitmap zooming engine 951, a rendering engine 953, and an UI processor 955.

The touch screen 910 is a kind of input and output unit, namely, has both the touch sensor unit 913 used to execute an input function and the display unit 911 used to execute an output function.

The display unit 911 displays graphical data produced while any function of the mobile device is executed, and displays a variety of information depending on a user's manipulation and function settings. Also, the display unit 911 displays a plurality of data in connection with the state and operation of the mobile device. And also, the display unit 911 visually represents signals and color data outputted from the control unit 950. Particularly, the display unit 911 not only displays the target data associated with the execution of a selected mode, but also displays variations of the target data under the control of the control unit 950. In addition, the display unit 911 visually represents graphical elements associated with the activation of a zoom mode around a user's input position.

The touch sensor unit 913 is disposed near and combined with the display unit 911 in order to detect a user's touch inputted on the surface of the touch screen 910. The touch sensor unit 913 detects the coordinate of a touch point when a user touches a specific point on the surface of the touch screen 910. Then the touch sensor unit 913 transmits a detected coordinate to the control unit 950. That is, the touch sensor unit 913 detects a user touch action, generates an input signal corresponding to a detected touch, and sends a generated input signal to the control unit 950. Thereby, the control unit 950 performs a particular function in connection with a touch point by means of a touch input signal received from the touch sensor unit 913.

Particularly, the touch sensor unit 913 detects a user gesture input as a specific interrupt. If the specific interrupt is detected in a selected mode of operation, the touch sensor unit 913 enters into a zoom mode which allows the detection of a gestural input for a zooming control. When a gesture-based user input is detected in the zoom mode, the touch sensor unit 913 sends, to the control unit 950, the coordinate of a starting point of a user gesture (namely, the coordinate of an occurring point of an interrupt) and the coordinates of traveling points of the user gesture. Then the control unit 950 determines the user gesture from received coordinates and controls the zooming action in response to the user gesture. Also, the control unit 950 outputs the display target data one of scaled up and down depending on the zooming action to the display unit 911. Meanwhile, when an interrupt for executing a toggle function is detected in a selected mode of operation, the touch sensor unit 913 sends information about the toggle function to the control unit 950. Then the control unit 950 performs the toggle function of the display target data on the display unit 911, depending on the received information sent from the sensor unit 913.

The memory unit 930 comprises any of ROM (read only memory) and RAM (random access memory). The memory unit 930 stores a plurality of data created and used in the mobile device. Such data includes data selected from the group consisting of internal data produced during the execution of applications in the mobile device, and external data received from external entities such as a base station, other mobile device, and a personal computer. In particular, data stored in the memory unit 930 includes data selected from the group consisting of user interfaces offered in the mobile device, setting information related to the use of the mobile device, bitmap images required for a zooming control based on a user gesture, information about selectable directions of a move event, and zoom factor values.

Additionally, the memory unit 930 stores a plurality of applications required for controlling a general operation of the mobile device, and a plurality of applications required for controlling a zooming function based on a user gesture in the mobile device as discussed above. These applications are stored in an application storage region (not shown) in the memory unit 930. Also, the memory unit 930 includes at least one buffer which temporarily stores data produced in the execution of the above applications.

The control unit 950 performs an overall control function associated with the mobile device and controls the flow of signals between components in the mobile device. That is, the control unit 950 controls signal flows between the aforesaid components such as the touch screen 910 and the memory unit 930.

The control unit 950 controls the activation of a zoom mode. Also, the control unit 950 receives a user gesture input (e.g., a move event) from the touch screen 910 in a zoom mode and controls a zooming action such as a zoom-in or a zoom-out in response to a received gesture input. And also, while the target data is displayed in a selected mode of operation, the control unit 950 controls such a zooming action in response to a user gesture input (e.g., a double tap event).

Particularly, the control unit 950 retrieves a bitmap image of specific content offered in response to a predefined input event in a zoom mode of the mobile device and, by using the bitmap image, performs a processing of a continuous zooming action varied according to an input event. Also, the control unit 950 offers real-time variations of a bitmap image one of enlarged and reduced through a continuous processing of a zooming action. When a release of an input event is detected, the control unit 950 modifies (namely, one of enlarges and reduces) the display size of the target data of actual content according to one of an enlargement and reduction ratio of the bitmap image, namely, a zoom factor value. Then the control unit 950 controls the display unit 911 to display the modified target data thereon. For such a zooming control, the control unit 950 comprises the bitmap zooming engine 951, the rendering engine 953, and the UI processor 955.

The bitmap zooming engine 951 determines a zoom factor value modified depending on a user gesture inputted through the touch screen 910, and then performs a zooming function using a bitmap image according to a determined zoom factor value.

The rendering engine 953 performs a redrawing action for the display target data of actual content by using a zoom factor value corresponding to a zooming rate of a bitmap image finally determined during a processing of a zooming action through a bitmap image. That is, the rendering engine 953 reconfigures the actual display target data modified in response to a user gesture.

The UI processor 955 performs one of a processing of a display associated with a bitmap image zoomed in the bitmap zooming engine 951 or performs a processing of a display associated with the actual display target data reconfigured in the rendering engine 953.

Generally the control unit 950 controls particular operations in connection with the present invention as discussed above with reference to FIGS. 1 to 9. The control function of the control unit 900 is embodied in but not limited to software, firmware, and dedicated chips.

Although configuration of the mobile device is schematically illustrated in FIG. 9, this is exemplary only and is not to be considered as a limitation of the present invention.

Although not illustrated in FIG. 9, many other elements can be one of essentially and selectively included in the mobile device of the present invention. For instance, the mobile device may further include a device selected from the group consisting of a radio frequency (RF) communication module, a camera module, a digital broadcast receiving module, a short distance communication module, and an Internet access module. If the mobile device of this invention supports a mobile communication service, the control unit 950 includes a baseband module normally required for a mobile communication service of the mobile device. Such a baseband module is included in at least one of the control unit 950 and the RF communication module.

According to a digital convergence tendency today, such components can be varied, modified and improved in various ways, and any other elements equivalent to the above components can be additionally or alternatively provided in the mobile device. Meanwhile, as will be understood by those skilled in the art, some of the above-mentioned components in the mobile device can be one of omitted and replaced with another functionally equivalent component.

According to the above-discussed embodiments of the present invention, a user can easily manipulate a mobile device to quickly activate a zoom mode by invoking a simple interrupt. Also, a user can easily manipulate a mobile device to enlarge or reduce a displayed image of content around a desired point in a desired ratio by inputting a simple gesture in a zoom mode. And also, a user can easily manipulate a mobile device to adaptively perform a conversion between an enlargement and a reduction of a displayed image by invoking a simple interrupt. Furthermore, according to exemplary embodiments of this invention, a zoom mode can be activated when a user invokes a long press at a certain point (x, y) on a touch screen. In this case, a user can perform a zooming action in the following two ways.

First, a user can move one of his or her finger and a stylus pen upwardly or downwardly from a pressed point (x, y) in order to perform a zoom-in or a zoom-out around that point (x, y). Then the mobile device modifies a zoom factor value depending on a move distance of the finger and the stylus pen and offers content one of enlarged and reduced depending on a modified zoom factor value. Second, a user can hold one of his or her finger and a stylus pen without moving at a pressed point (x, y). Then, the mobile device offers one of content enlarged and reduced step by step around that point (x, y) at given periodic intervals.

In order to offer the display target data in response to one of a user's zoom-in and zoom-out request, the mobile device employs a bitmap image. For instance, in response to a user's request for a zoom-in function, the mobile device does not directly enlarge the display target data of actual content, but offers a portion of a bitmap image modified depending on the zoom-in function. Then, in response to a user's release for the zoom-in function, the mobile device reconfigures and displays the display target data of actual content according to a zooming rate of the bitmap image. Like the above, since a zooming control in an embodiment of this invention uses the bitmap image to rapidly offer variations in display, it is possible to smoothly support a zoom function in response to a user's quick gesture. That is, it allows a real-time zooming control for the bitmap image corresponding to the display target data of actual content whenever a user gesture is changed in a zoom mode. Accordingly, the mobile device in embodiments of the present invention improves the convenience of a zooming function.

Moreover, according to the above-discussed embodiments of the present invention, even in the mobile devices requiring a frequent zooming because of their display size limitations, it is possible to easily and quickly one of enlarge and reduce the display target data of content around a desired position through a simple gesture invoked at a single point. That is, the mobile device according to embodiments of the present invention allows a much simpler process of executing a zooming function.

Additionally, according to the above-discussed embodiments of the present invention, a user can easily manipulate the mobile device to simply one of enlarge and reduce a displayed image through a toggle function based on a simple gesture input. That is, a displayed image can be simply one of scaled up and down at a corresponding given enlargement and reduction ratio. Therefore, it is possible to obtain the effect of offering one of a preview image and a magnifier. In conclusion, a touch-based zooming control technique of the present invention can be included in mobile devices having any kind of a touch sensitive surface or interface.

The above-described methods according to the present invention can be realized in hardware or as software or computer code that can be stored in a recording medium such as a CD ROM, a RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While this invention has been particularly shown and described with reference to an exemplary embodiment thereof, it will be understood by those skilled in the art that various changes in form and details may be made therein without departing from the spirit and scope of the invention as defined by the appended claims.

## Claims

1. A method for a touch-based zooming control in a mobile device, the method comprising:
displaying target data of selected content on a screen;
activating a zoom mode while the target data is displayed;
receiving a touch-based gesture input starting from a specific point on the target data; and
executing a zooming function in response to the gesture input.

2. The method of claim 1, wherein the activating of the zoom mode includes activating the zoom mode when a long press input occurs at the specific point on the target data.

3. The method of claim 2, wherein the executing of the zooming function includes enlarging or reducing the target data around the specific point according to the progress of the gesture input.

4. The method of claim 3, wherein the executing of the zooming function includes retrieving a bitmap image corresponding to the target data when the gesture input is received, and performing a zooming action associated with the bitmap image in response to the gesture input.

5. The method of claim 4, wherein the executing of the zooming function includes performing a zooming action associated with the target data according to a magnification value modified by the zooming action associated with the bitmap image when the gesture input is released.

6. The method of claim 2, wherein the gesture input includes at least one of a move event and a hold event.

7. The method of claim 6, further comprising:
enlarging or reducing continuously a bitmap image according to a travel distance of the move event when the move event is received, the bitmap image corresponding to the target data; and
enlarging or reducing step by step a bitmap image at given periodic intervals while the hold event is received, the bitmap image corresponding to the target data.

8. The method of claim 2, further comprising:
determining the type of an interrupt occurring while the target data is displayed;
if the interrupt is for the zoom mode, activating the zoom mode; and
if the interrupt is for a toggle mode, executing a toggling function associated with the target data in response to the interrupt.

9. The method of claim 2, further comprising:
activating the zoom mode in response to an interrupt for the zoom mode, the interrupt occurring at the specific point;
receiving the touch-based gesture input for a zooming control in the zoom mode;
performing a first zooming process for a bitmap image corresponding to the target data around one of the specific point and a starting point of the gesture input in response to the gesture input; and
performing a second zooming process for the target data depending on a zoomed amount of the bitmap image in response to a release of the gesture input.

10. The method of claim 9, wherein the first process includes:
enlarging or reducing continuously the bitmap image around the specific point or the starting point according to a travel distance of a move event when the move event is received in the zoom mode; and
enlarging or reducing step by step the bitmap image around the specific point or the starting point at given periodic intervals while a hold event is received in the zoom mode.

11. The method of claim 10, further comprising:
displaying a graphical element on the touch screen when the zoom mode is activated, the graphical element indicating the activation of the zoom mode.

12. The method of claim 10, further comprising:
displaying the target data with a basic magnification value when a double tap event is received in the zoom mode; and
inactivating the zoom mode when a double tap event is received in the zoom mode.

13. A mobile device comprising:
a display unit configured to display target data of selected content enlarged or reduced depending on a zooming function;
an input unit configured to receive a touch-based input event for executing the zooming function around a specific point on the target data when a zoom mode is activated; and
a control unit configured to execute the zooming function associated with a bitmap image of the target data and to control the zooming function associated with the target data according to an enlargement or reduction ratio of the bitmap image.

14. The mobile device of claim 13, wherein the input unit includes at least one of a touch screen and a touch pad.

15. The mobile device of claim 13, wherein the control unit includes:
a bitmap zooming engine which determines a zoom factor value modified depending on a user gesture inputted through the input unit and then executes the zooming function using the bitmap image according to the zoom factor value;
a rendering engine which reconfigures the target data modified by the execution of the zooming function for the bitmap image; and
an user interface processor which performs a processing of a display associated with the bitmap image zoomed in the bitmap zooming engine and performs a processing of a display associated with the target data reconfigured in the rendering engine.
